(19) Europäisches Patentamt
European Patent Office
Office européen des brevets

(11) Publication number: **0 482 427 A2**

# (12) EUROPEAN PATENT APPLICATION

(21) Application number: **91117224.5**

(51) Int. Cl.$^5$: **G06K 9/66**

(22) Date of filing: **09.10.91**

(30) Priority: **25.10.90 US 603581**

(43) Date of publication of application:
**29.04.92 Bulletin 92/18**

(84) Designated Contracting States:
**CH DE ES FR GB GR IT LI NL SE**

(71) Applicant: **HUGHES AIRCRAFT COMPANY**
**7200 Hughes Terrace**
**Los Angeles, CA 90045-0066(US)**

(72) Inventor: **Daniell, C. A.**
**1906 Christine Avenue**
**Simi Valley, California 93063(US)**
Inventor: **Tackett, W. A.**
**20307 Vose Street**
**Canoga Park, California 91306(US)**
Inventor: **Alves, J. A.**
**26305 West Bravo Lane**
**Calabasas, California 91302(US)**
Inventor: **Burman, J. A.**
**4114 La Venta Drive**
**Westlake Village, California 91361(US)**
Inventor: **Johnson, K. B.**
**12942 View Mesa**
**Moorpark, California 93021(US)**

(74) Representative: **Witte, Alexander, Dr.-Ing.**
**Augustenstrasse 7**
**W-7000 Stuttgart 1(DE)**

## (54) Self adaptive hierarchical target indentification and recognition neural network.

(57) A self adaptive hierarchical target identification neural network pattern recognition system (10) is constructed utilizing four basic modules. The first module is a segmenter and preprocessor (14) which accepts gray level image data (12) and is based on the Boundary Contour System neural network. The segmenter and preprocessor (14) output is fed to a feature extractor (16) which comprises a first layer of a neocognitron. The feature extractor (16) output is fed to a pattern recognizer (18) which comprises two layers of the neocognitron. The pattern recognizer (18) produces as output a real valued vector representation which encodes the object to be identified. This vector representation is fed to a classifier (20) which comprises a back propagation neural network. The pattern recognition system (10) can classify large numbers of objects from raw sensor data and is relatively translation, rotation and scale invariant

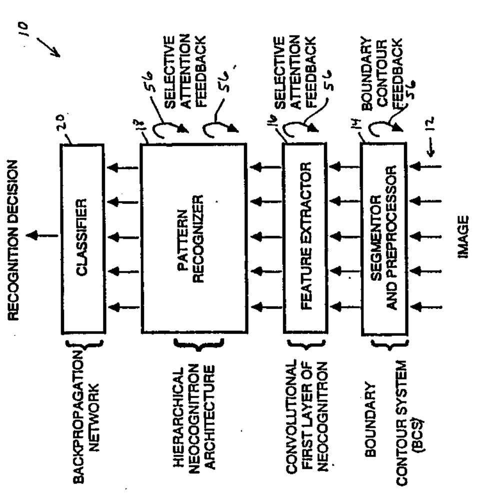


FIG 1

EP 0 482 427 A2

## BACKGROUND OF THE INVENTION

### 1. Technical field

This invention relates to neural networks, and more particularly to a neural network for performing hierarchical pattern recognition.

### 2. Discussion

Pattern and image processing systems based on neural network models have been the subject of considerable recent research. The goal of this research has been to develop computer vision systems which approach the capabilities and efficiency inherent in biological visual systems. Neural networks have an advantage over conventional object recognizers such as statistical object recognizers in which features must be specified prior to operation, since a neural network can determine its own features through training. Numerous neural network models, more or less loosely based on current understanding of actual biological systems have been utilized to tackle various aspects of the image processing task. While existing models and systems have demonstrated varying degrees of success, they also suffer from a number of disadvantages which limit their usefulness in certain kinds of image processing tasks. Moreover, previous neural network systems appear to be suited for certain aspects but not the end-to-end process of image recognition.

For example, one neural network that is particularly suited to early low level image processing is the Boundary Contour System (BCS), developed by Stephen Grossberg. The BCS system, which is the subject of U.S. Patent No. 4,803,736 issued to Grossberg et al., herein incorporated by reference, has shown promise in its ability to extract edges from raw or gray level image data. However, it is essentially a mathematical model of low-level biological vision and is not designed for mid to high level vision or recognition functions.

Another related neural network model is known as the Neocognitron. The Neocognitron was developed by Kunihiko Fukushima. See K. Fukushima, "Neocognitron: a new algorithm for pattern recognition tolerant of deformations and shifts and position", Pattern Recognition, volume 15, number 6, page 455 (1982), which is hereby incorporated by reference. The Neocognitron has shown promise as a feature extractor and pattern recognizer capable of recognizing relatively complex features. However, the Neocognitron is not well suited to processing gray level data, and thus, is applied primarily to binary image data input. Also, the Neocognitron is quite limited in the number of objects it can classify. For example, the number of objects the Neocognitron is capable of classifying is generally limited to the number of output planes in the system. In many cases it is desirable to be able to classify a large number of objects and this would exceed the limitations on the number of output planes it is practical to provide in the Neocognitron. Also, the Neocognitron can only handle limited amounts of changes in translation, rotation or scale in the input image.

Another common neural network model is the backpropagation network, also called the multi-layer perceptron. The backpropagation network has shown success in classifying various types of input patterns, and can classify a large number of objects. It can also encode a real valued vector representation of an object as opposed to producing simply a class designation. However, it is not particularly suited to image processing since, in general, the input features are not translation, rotation or scale invariant. That is, if the backpropagation network is trained to recognize a particular image, it will have difficulty recognizing that image if it is shifted, rotated, scaled or distorted.

Thus, it would be desirable to provide an image processor which overcomes some or all of the above disadvantages. Further, it would be desirable to provide a neural network system which can accept raw gray level sensor input from an image and encode a large number of objects or targets. In addition, it would be desirable to have a pattern recognition system which can recognize relatively complex features with a high degree of translation, rotation, scale and distortion invariance.

## SUMMARY OF THE INVENTION

Pursuant to the present invention, a pattern recognizer is disclosed which can encode and identify a large number of patterns. The system includes a boundary segmenter for receiving input data and for producing as output a plurality of gradient orientation response signals in parallel. The system also includes a feature extractor coupled to the segmenter for receiving the parallel output from the boundary segmenter and for generating output responses that characterize elemental features in the input signal. Also, a pattern recognizer is coupled to the feature extractor output for combining a plurality of the elemental feature

responses to form new parallel output responses that characterize complex combinations of the elemental features. Finally, a classifier is coupled to the pattern recognizer output for providing an output that encodes a real valued vector representation of the input pattern.

The pattern recognizer is able to accept continuous valued input data and extract relatively complex features and encode a large number of possible input patterns. Further, the system is capable of recognizing patterns that are translated, rotated, or scaled.

## BRIEF DESCRIPTION OF THE DRAWINGS

The various advantages of the present invention will become apparent to one skilled in the art by reading the following specification and by reference to the following drawings in which:

FIG. 1 is a diagram of the pattern recognition system in accordance with the present invention;

FIG. 2 is a block diagram of the boundary segmenter portion of the pattern recognition system shown in Fig. 1;

FIG. 3 depicts the Shunting Membrane Equation (SME) used to calculate output responses of neurons in the Boundary Contour System shown in FIG. 2;

FIG. 4 is a diagram of the feature extractor and pattern recognizer portions of the pattern recognition system shown in FIG. 1;

FIG. 5 is a diagram illustrating the response of various US1 planes in response to an input in the U0 plane;

FIG. 6 is a diagram illustrating how the Neocognitron in the feature extractor and pattern recognizer produces an internal representation of an input pattern;

FIG. 7 is a further illustration of the connectivity and operation of the feature extractor shown in FIG. 4;

FIG. 8 is a further illustration of the operation of the feature extractor shown in FIG. 4;

FIG. 9 is an illustration of the computation of the output of a single neuron in US1 layer shown in FIG. 4;

FIG. 10 is a table of Neocognitron parameters used to control the operation of the feature extractor in the pattern recognizer shown in FIG. 4; and

FIG. 11 is a diagram of a the backpropagation network shown in FIG. 1.

## DESCRIPTION OF THE PREFERRED EMBODIMENT

Referring now to Fig. 1, a Self Adaptive Hierarchical Target Identification and Recognition Neural Network (SAHTIRN) pattern recognition system 10 in accordance with the present invention is shown. The pattern recognition system 10 is trained to recognize particular desired patterns such as certain features e.g. targets in an image, printed or written characters, or particular waveforms. The pattern recognition system 10 accepts as input data which may be raw continuous valued gray level data 12 from an image sensor (not shown). This data 12 is processed by the pattern recognition system 10 in four major components: a segmenter and preprocessor 14, a feature extractor 16, a pattern recognizer 18 and a classifier 20.

The segmenter and processor 14 preprocesses and segments raw sensor imagery for input to the feature extractor. The segmenter 14 may comprise any general type of segementation process which converts a gray-level image into a binary representation of the scene. Examples include a Regularization Network, a Canny Edge Extractor, a Sobel Edge Extractor or a Boundary Contour System. The segmenter and preprocessor 14 provides localized gain and level control to handle dynamics and brightness effects that could reduce the performance of conventional sensor preprocessing systems. The segmenter and processor 14 also functions as a gradient, or edge operator, and adaptive boundary segmenter. Next, the boundary segmented scene and target pattern are passed to the feature extractor 16 and then to the pattern recognizer 18. Both of these components are based on the architecture of the Neocognitron. Both the feature extractor 16 and pattern recognizer 18 are self-organizing and must undergo a short training phase. The feature extractor 16 learns to extract features that are characteristic of the expected targets and scenes. These primitive features are then aggregated by the hierarchical structure within the pattern recognizer 18 to form a compressed representation of the input image. The pattern recognizer 18 learns to extract these spatial relationships of the primitive features and therefore identifies the spatial structures and the scene and target. The final component is the classifier 20. The compressed representation of the image output from the pattern recognizer is classified by a supervised back propagation network within the classifier 20.

A preferred embodiment of the segmenter and preprocessor 14 is shown in more detail in FIG. 2. The segmenter and preprocessor 14 consists of 12 individual Binary Contour Systems 22 operating in parallel. That is, each of the individual Binary Contour Systems 22 operate on the same input image 12 but at a

different orientation. These orientations are achieved by means of orientated masks in the gradient phase field module 24 of the boundary contour systems 22. For example, the 12 orientations may be separated by 15°. The function of the segmenter and preprocessor 14 is to convert raw image data 12 into a map representing the structure of objects in a scene. The Boundary Contour System 22 is described in more detail in the above mentioned U.S. Patent No. 4,803,736. Another useful description is found in S. Grossberg and E. Mingolla, "Neural dynamics of surface perception: boundary webs, illuminance, and shape-from-shading", Computer Vision Graphics and Image Processing, 37 116-165 (1987), which is hereby incorporated by reference.

The BCS system contains a feedback mechanism which triggers cooperation and competition between gradient orientation responses to help fill in missing or weak edge information. Each module within the boundary contour system 22 is constructed of individual neurons connected by weight masks which contain fixed weight connections. For example, where the input image 12 consists of 256 by 256 pixels, each module within the boundary contour system 22 will have 256 by 256 neurons. Thus, since there are 12 gradient phase field modules 24, each contains a different mask which convolves across the image 12 in a different orientation.

The gradient phase field module 24 output is coupled to the spatial gradient using center surround module 26, which performs the function of extracting some of the edges and of normalizing all of the responses, no matter how strong or dim the response of the neuron. Also it performs the function of thinning out responses where these responses are wide in certain regions. The output from the spatial gradient module 26 is transmitted to the local competition across orientations module 28. This module 28 operates on multiple responses from different local competition modules 28 in the boundary contour system 22. Where two response are very close to each other in orientation and a response is found in both modules 28, it is ambiguous as to which is stronger. Thus competition is performed between the orientations to determine which one is stronger. For example, if there were a horizontal and a vertical response in the same position, only one of these could win because obviously there cannot be more than one orientation at each position in an image. As a result, the neuron that doesn't win the competition is turned off.

The output from module 28 is transmitted to the global cooperation among orientations module 30. This module, instead of crossing into adjacent Boundary Contour Systems 22 remains in a single orientation module 22 and compares one position with neighboring pixels. For example, if there were a vertical edge this module will look above and below this edge to see if there are other vertical edges, if there are they would be connected together. This performs cooperation along the edge to connect gaps. Output from this module 30 is transmitted to the spatial gradient using center surround module 32. This module 32 is similar to the previous spatial gradient module 26 since it counteracts the affect of cooperation in module 30 to remove possible blurring caused by cooperation. That is, one disadvantage of cooperation is that if it is done too strongly, it could blur an image across some of the edges. The spatial gradient module 32 then sharpens up these edges.

This particular segmenter and preprocessor 14 can be used with or without feedback. If feedback is not used, the output from the spatial gradient using center surround module 32 is transmitted to the next feature extractor stage 16. Alternatively, as shown in FIG. 2 this module 32 may be coupled to the input of the spatial gradient module 26. It will be appreciated that with a closed loop the output is better but that the system takes a lot more computation. In open loop operation (without feedback), some of the quality of the response is lost but the computation can be performed much quicker. The automatic gain control functions and automatic level control are performed intrinsically in the Boundary Contour Systems 22.

The Boundary Contour System 22 neuron outputs are calculated by means of sets of coupled time-varying nonlinear first-order equations. The basic equation is shown in FIG. 3. This equation is known as the Shunting Membrane Equation. An output neuron generates the response X by processing a region k of input neurons I. The g mask weights the neuron inputs at the center of the region more strongly than those at the perimeter to produce the excitatory term I+. The e mask amplifies the perimeter neuron inputs to produce the inhibitory term I-. The Shunting Membrane Equation scales these two terms and compares them to provide a local spatial-contrast measure that drives the temporal response of the output. Thus, unlike the standard neuron models, both spatial and temporal processing are performed by the Shunting Membrane Equation model. The Shunting Membrane Equation adaptively scales the output response X, bracketing it in steady-state, ($dx/dt = 0$), between b and -c. The g and e masks are smaller than the image (eg. 10 neurons by 10 neurons) and they are convolved across the entire image.

The Boundary Contour System 22 provides many powerful capabilities that cannot be found in conventional segmentation schemes. First, this segmentation system is fully defined by mathematical equations. This is very different from conventional segmentation schemes that use heuristic expert systems

and logical programs to segment an image. This allows the Boundary Contour System 22 to be analyzed using classical signal processing, system theory, and mathematical techniques. This kind of understanding is not possible with the conventional techniques. Second, the Shunting Membrane Equation for all the computations provides automatic gain control and automatic level control at each stage of the computation. Therefore the sensitivity of each computation is constantly being adjusted by the data. That is, the computation is adaptive.

The gradient orientation response images 34 produced by the segmenter and preprocessor 14 are transmitted to the feature extractor 16. The feature extractor 16 comprises layer one of a Neocognitron while the pattern recognizer 18 includes layer two and layer three of the Neocognitron. Further details of the Neocognitron architecture may be found in the above-referenced paper by Fukushima. In general, the Neocognitron is a multi-layer feed forward neural network designed specifically for image pattern recognition. Each layer of the Neocognitron is divided into a simple (US) and a complex (UC) sublayer. Referring now to FIG. 4, each sublayer contains 12 two-dimensional arrays 36 of neurons. The first 12 (US1) arrays 36 receive the gradient orientation response images 34 produced by the boundary segmenter 14. Transformation between layers is accomplished by convolutional masks 38 which are essentially connections between neurons. These masks adapt during unsupervised training to form the feature set used for image description. Transformation between sublayers such as between US1 sublayer 40 and UC1 sublayer 42 is by means of a fixed convolutional mask 44.

Each neuron processes a small region of neurons in the preceding layer to form responses characteristic of the pattern of neural activity being presented. For example, the UC1 neurons process the US1 arrays 36 to generate responses that characterize elemental features such as oriented line segments or arcs. The pattern recognizer 18 layers combine or aggregate these low level feature responses together to form new responses that characterize complex combinations of the low level features in the UC1 sublayer 42. The size of each neuron array shrinks with each successive layer because fewer neurons are required to characterize the increasingly rare feature combinations. Thus, there are fewer neurons in the arrays 36 in the US2 layer 46 and UC2 layer 48 than there are two-dimensional arrays 36 in the US1 layer and UC1 layer 40 and 42. Likewise, there are still fewer neurons in the two-dimensional array 36 in the US3 layer 50. At the output layer UC3 52, the array size is only one neuron by one neuron. This results in a 12 element vector that characterizes the original gradient patterns input by the boundary segmenter 14. This vector is then sent to the classifier 20 for final analysis.

The operation of the Neocognitron is described in more detail below in reference to FIGS. 5-10. In FIG. 5 there is shown a diagram of the operation of the US1 plane 40 on an input from the boundary segmenter 14 consisting of a binary image 54 of the numeral 5. This binary image 54 is shown on the VO plane 54 which corresponds to the images 34 shown in FIG. 4.It can be seen that each of the US1 planes 36, K = 1, K = 2...K=12, respond to a different primitive feature in the input pattern. The location of the active neuron in the plane 36 implies the position of the feature. Referring now to FIG. 6 successive layers are shown illustrating how the neuron arrays extract more complex features by hierarchically clustering features from the lower layers. The location of the activity on an array identifies the spatial position of the feature in the previous layer. Thus the more complex features preserve these spatial relationships and structure of the input pattern. The final layer is an abstract compression of the original input pattern. This process is shown in more detail in FIG. 7 illustrating how relatively primitive features in the US1 layer 40 and UC1 layer 42 are aggregated in the US2 layer 46 to form responses that characterize complex combinations of these low level features. Referring now to FIG. 8, the feature extraction process at the US1 layer 40 is shown in more detail. Figure 8 shows how each plane in US1 extracts a unique feature according to its related a mask. This unique feature extraction occurs in the simple sublayer at each layer of the Neocognitron. The blurry line represents the inhibitory response $V_0$ which is subtracted out.

These transformations in successive layers of the feature extractor 16 and pattern recognizer 18 are performed by a nonlinear convolution-like operation. The convolution is done with two different two-dimensional masks called a and c. Each plane in US1 40 has a different a mask for each plane and uses a common c mask for all planes in the layer. For example, if there are twelve planes in the US1 sublayer 40 and one U0 plane there are twelve different a masks and one c mask involved in the transformation of the input pattern into the representation contained in the twelve US1 planes. In the training mode the weights contained in the a masks are adjusted according to a learning algorithm described in the above-referenced article by Fukushima. This training produces masks that extract specific primitive features at layer one, and the spatial relationships of these primitive features at layers two and three.

The feature extraction process at layer one is based on a convolutional operation that is most easily understood if one describes the operation for a single neuron in a single US1 plane 36. The computation of a single neuron's value in a US1 plane can be viewed as being comprised of two parts: an excitatory

component, E, and an inhibitory component, H. Both components involve computing the weighted sum of the UC0 input neurons in the N x N region under the a and c masks. The architecture of the computation is depicted in FIG. 9.

Mathematically, the computation of a single neuron's value in one of the US1 planes is described by

$$US1 = \varnothing\left[\frac{\sum_i a_i u_i - kb\sqrt{\sum_i c_i u_i^2}}{1 + kb\sqrt{\sum_i c_i u_i^2}}\right] \qquad \varnothing(x) = \begin{cases} 0, & x \le 0 \\ x, & x > 0 \end{cases}$$

where a and c are the two-dimensional weight masks ordered as one-dimensional vectors, U are the units on the previous layer U0 where the pattern is stored, K is an externally set parameter and b is a learned parameter. The function phi provides a linear threshold of the response. There are two components of this particular system that change, or learn; the weights of the two-dimensional a mask and the single real valued number b. It is important to note that there are as many sets of learned a masks and b weights as there are planes in the US1 layer.

It should be noted that optimum operation of the Neocognitron depends on the selection of a number of parameters which can be used to optimize the system's performance. The key parameters within the Neocognitron of the feature extractor 16 and pattern recognizer 18 are shown in Figure 10. It will be appreciated that since transformation from layer to layer in the Neocognitron is accomplished by convolutional masks, the size of these convolutional masks is a key parameter and significantly affects the Neocognitron's performance. The mask sizes may be different at each layer. These parameters are defined in FIG. 10. For further discussion of the operation of these parameters and the effects on performance of the Neocognitron see K. Johnson, C. Daniell and J. Burman, "Feature Extraction in the Neocognitron", Proc. IEEE International Conference on Neural Networks, Volume 2, Pages 117-127, 1988, which is hereby incorporated by reference. Also useful in this regard are the papers, K. Johnson, C. Daniell and J. Burman, "Hierarchical Feature Extraction and Representation in the Neocognitron", Neural Networks, Volume 1, Supp. 1, Pergamon Press, Pages 504 (1988), and K. Johnson, C. Daniell and J. Burman, "Analysis of the Neocognitron's Outputs and Classification Performance Using Back Propagation", Neural Networks, Volume 1, Supp. 1, Pergamon Press, Page 504 (1988), which are both hereby incorporated by reference.

It is important to note that the Neocognitron comprising the feature extractor 16 and pattern recognizer 18 within the pattern recognition system 10 when used in the manner as above described functions as a pattern encoder rather than a classifier, as is commonly used. That is, the Neocognitron in the present invention encodes a real valued vector representation of an object as opposed to producing a class designation. With 12 single unit output planes 36 in the final UC3 layer 52 as shown in FIG. 4, a conventional Neocognitron can classify only 12 objects, each output plane classifying a single object. However, in accordance with the present invention the Neocognitron within the pattern recognition system 10 can encode for example, one trillion different objects, using only one decimal place precision, in a fixed number of neural elements. For example, if each output plane in the UC3 layer can have a value of zero, .1, .2, .3... .9, all combinations of these analog values on 12 planes yields $10^{12}$ possible values. All of these vector representations of objects may then be classified by means of the classifier 20 described below in connection with FIG. 11.

Referring again to FIG. 1, it is noted that a series of arrows 56 labeled Selective Attention Feedback are shown. In accordance with one embodiment of the present invention the feature extractor 16 and pattern recognizer 18 may utilize a Selective Attention Mechanism 56 that allows the Neocognitron to selectively lock onto patterns or targets of interest. The Selective Attention Feedback mechanism 56 uses recognition-based feedback to provide clutter suppression, compensation for occlusions or low contrast areas in the input pattern, and selective attention to multiple patterns in the field of view. The Selective Attention Feedback Mechanism 56 has a second data structure duplicating the feed forward path in the Neocognitron in which information flows backward from output to input. At the output layer, feedback masks are convolved with the feed forward correlation responses, effectively creating blurred "ghost images" of the feed forward data. As this information flows backwards through the feedback hierarchy, it is combined with the feed forward signal to produce gain control mechanisms that may amplify or attenuate portions of the

input image. Clutter suppression is provided via competition in the feedback paths. Compensation for weak or missing features is provided since in areas where features are weak or missing, there is a larger feedback signal than feed forward. In such areas, the local feed forward gain is increased proportional to this disparity. At the lowest level the feedback is summed with the input pattern to produce a filling in where small portions of the pattern are missing. In the presence of multiple input patterns, the Selective Attention Feedback Mechanism 56 will cause the Neocognitron to attend to only one pattern at a time. This is achieved by the same competition mechanism which serves to provide the clutter suppression function. Further details of the selective attention feedback Neocognitron may be found in the paper, K. Fukushima, "A Neural Network Model for Selective Attention, "Proceedings IEEE First International Conference on Neural Networks, (1987), which is hereby incorporated by reference.

Referring now to FIG. 11 the classifier 20 is shown. In accordance with the preferred embodiment, the classifier 20 comprises a three layer backpropagation network. Layer 1 or the input layer 58 comprises 12 input neurons which receive the 12 output signals from the pattern recognizer 18. These input neurons 58 are coupled to a layer of hidden neurons 60 which in turn are connected a layer of output neurons 62. Twelve real valued inputs x, from the pattern recognizer 18 are processed by the classifier 20 into a M-bit binary vector. Each bit of the classifier output corresponds to a target class (or target sub-class). One of the output bits is used to signify "no target found". A supervised training period is used to determine the weight values that maximize the probability of correct classification for a given acceptable false alarm rate. It will be appreciated that the backpropagation network is well known and further details of its operation and construction may be found in the article R.P. Lippmann, "An introduction to computing with neural nets", IEEE ASSP magazine, April, 1987. The outputs of the classifier 20 may be used in any manner depending on the application. For example, where the pattern recognition system 10 is utilized with a missile guidance system, the classifier outputs may be used to produce control signals used by the missile guidance system. Such a system could locate and classify small target areas in the input image since the pattern recognition system 10 can process local regions of the input image at different times.

It should be noted that one advantage of the pattern rocognition system 10 in accordance with the present invention is its modularity. Each of the modules, that is the segmenter 14, the pattern recognizer and feature extractor 16 and 18, and the classifier 20, may be removed and replaced with more classical modules. This facilitates the incorporation of the pattern recognizer system 10 into an existing system.

The pattern recognizer 10 can be used in a wide variety of applications. The data to be analyzed may be an image or may be some other kind of waveform. The system is applicable to many types of military or non-defense applications such as airport security systems, optical character recognition, smart highway programs, signal classification, etc.

The pattern recognition system 10, in accordance with the present invention, may be implemented in software, hardware, or a combination of hardware and software. All of the hardware components necessary to implement the present invention, whether in digital or analog fashion, are known. A computer system sold under the trademark "DATA CUBE", manufactured by Data Cube Incorporated may be advantageously employed in such an implementation. Further, it will be appreciated that the functions performed in the pattern recogntion system 10 in accordance with the present invention may alternatively be performed using optical devices. For example, electro-optic matrix multipliers, linear modulator arrays, holographic correlators etc. have all been used in the implementation of neural network architectures. The masks in the pattern recognition system system 10 may be constructed using spatially multiplexed computer generated holographic feature filters.

From the foregoing, it can be seen that the present invention provides a pattern recognizing system 10 that can accept raw sensor data and encode a large number of possible input patterns. Further, the system 10 can perform pattern recognition with a high degree of translation, rotation, or scale invariance. Those skilled in the art can appreciate that other advantages can be obtained from the use of this invention and that modifications can be made without departing from the true spirit of the invention after studying this specification, drawings and following claims.

## Claims

**1.** A system for locating and classifying a target image contained in an input image (12), characterized by:
- a segmenter (14) for producing as output a binary image (34) representing the input image (12);
- a feature extractor (16) coupled to said segmenter (14) for receiving said output from said segmenter (14) and for generating output responses that characterize elemental features in said input image (12);

- a pattern recognizer (18) coupled to said feature extractor output for combining a plurality of said elemental feature responses to form new parallel output responses that characterized complex combinations of the elemental features; and
- a classifier (20) coupled to said pattern recognizer output for producing an output that corresponds to a predetermined classification of said target image.

**2.** The system of claim 1, characterized in that said input image (12) comprises raw sensor imagery data.

**3.** The system of claim 2, characterized in that said data comprises infrared sensor data.

**4.** A system for recognizing patterns in input data, characterized by:
- a segmenter (14) for producing as output a binary signal representing said input pattern;
- a feature extractor (16) coupled to said segmenter (14) for receiving said parallel output from said segmenter (14) and for generating output responses that characterize elemental features in said input data;
- a pattern recognizer (18) coupled to said feature extractor output for combining a plurality of said elemental feature responses to form new parallel output responses that characterize complex combinations of the elemental features; and
- a classifier (20) coupled to said pattern recognizer output for producing an output that corresponds to a predetermined classification of said patterns in said input data.

**5.** The system of any of claims 1 through 4, characterized in that said segmenter (14) comprises a Boundary Contour System (22) for separating said image (12) into a plurality of gradient images at equally spaced orientations, whereby said target is localized and separated within said input image (12).

**6.** The system of claim 5, characterized in that said Boundary Contour System (22) includes a system of Shunting Membrane Equation neurons to form large responses where gradient boundaries exist in the input image or date, respectively.

**7.** The system of claim 5 or 6, characterized in that said Boundary Contour System (22) comprises:
- means (24) for producing a gradient phase field using oriented masks;
- means (26) for generating a spatial gradient using center surround;
- means (28) for generating local competition across orientations; and
- a feedback mechanism (30, 32) including
  - means (30) for generating global coopertion among orientations whereby missing or weak edge information in said image is filled in, and
  - means (32) for generating a spatial gradient using center surround for removing blurring caused by the means (30) for generating global cooperation.

**8.** The system of any of claims 1 through 7, characterized in that said feature extractor (16) and said pattern recognizer (18) together comprise a neocognitron.

**9.** The system of claim 8, characterized in that said feature extractor (16) includes a first neocognitron layer (40, 42) and said pattern recognizer (18) comprises second and third neocognitron layers (46, 48, 50, 52), each of said first, second and third layers (40, 42, 46, 48, 50, 52) comprising two sub-layers (40/42, 46/48, 50/52), each sub-layer (40/42, 46/48, 50/52) having a two-dimensional array (36) of neurons, each of said neocognitron layers (40, 42, 46, 48, 50, 52) being connected by convolutional masks (38, 44) consisting of weighted connections between selected ones of said neurons.

**10.** The system of claim 9, characterized by means for adjusting the strength of said weighted connections by unsupervised training.

**11.** The system of any of claims 8 through 10, characterized in that said neocognitron comprises a selective attention neocognitron.

**12.** The system of any of claims 1 through 11, characterized in that said pattern recognizer (18) produces a vector representation of said target image.

**13.** A missile guidance system for locating and classifying a target image contained in an input image (12), characterized by:

- a Boundary Contour System (22) coupled to said input image (12) for producing as output a plurality of gradient orientation response images in parallel;
- a neocognitron comprising three layers (40/42, 46/48, 50/52), wherein said first layer (40/42) is coupled to said Boundary Contour System (22) and comprises a feature extractor (16), and the second and third layers (46/48, 50/52) comprise a pattern recognizer (18) coupled to said feature extractor (16) for generating parallel output response that characterize complex combinations of elemental features in said input image (12); and
- a back propagation neuron network coupled to said pattern recognizer (18) for producing an output that corresponds to a predetermined classification of said target image.

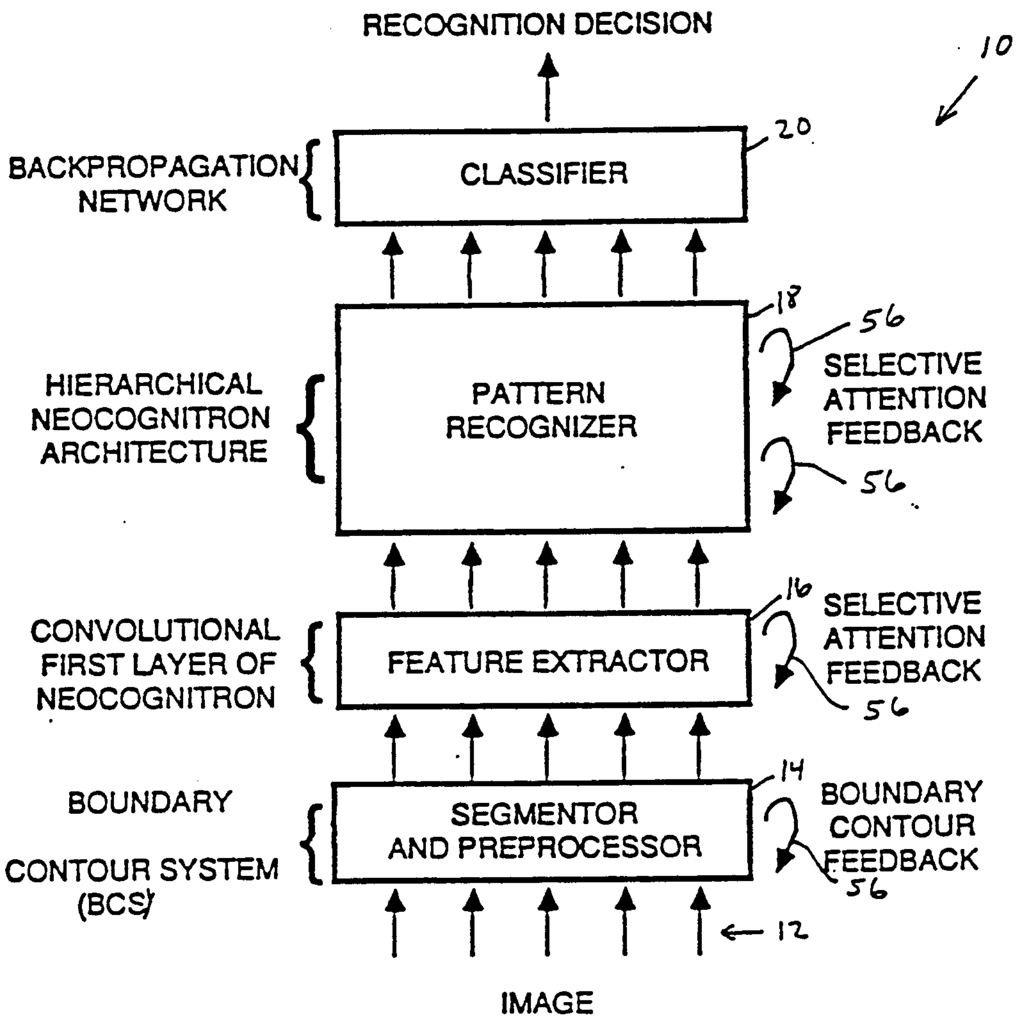
RECOGNITION DECISION
10
20
BACKPROPAGATION NETWORK
CLASSIFIER
18
56
SELECTIVE ATTENTION FEEDBACK
HIERARCHICAL NEOCOGNITRON ARCHITECTURE
PATTERN RECOGNIZER
56
16
SELECTIVE ATTENTION FEEDBACK
CONVOLUTIONAL FIRST LAYER OF NEOCOGNITRON
FEATURE EXTRACTOR
56
14
BOUNDARY CONTOUR FEEDBACK
BOUNDARY
CONTOUR SYSTEM (BCS)
SEGMENTOR AND PREPROCESSOR
56
12
IMAGE

FIG 1

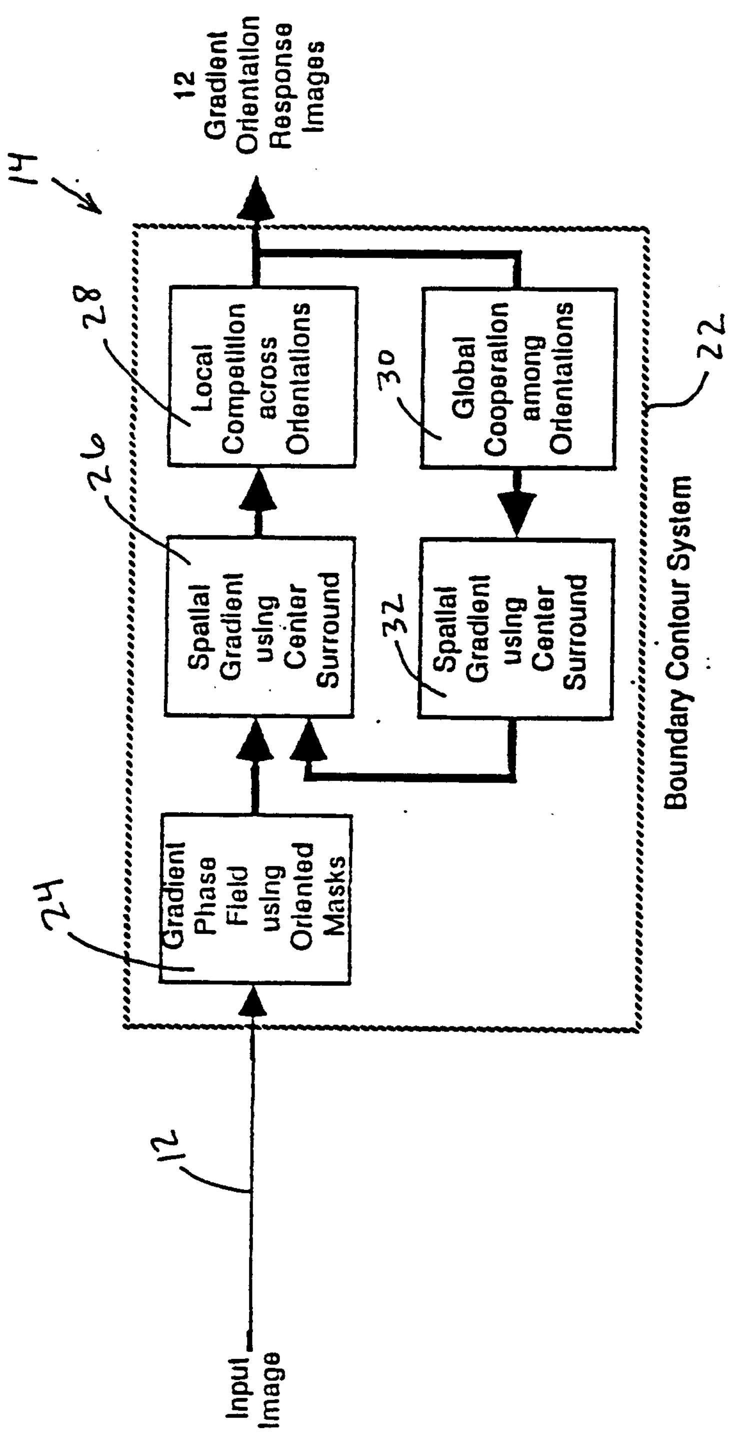
14
12 Gradient Orientation Response Images
Input Image
12
24
Gradient Phase Field using Oriented Masks
26
Spatial Gradient using Center Surround
28
Local Competition across Orientations
30
Global Cooperation among Orientations
32
Spatial Gradient using Center Surround
22
Boundary Contour System

FIG 2

$$\frac{dx}{dt} = -ax + (b-x)I^{+} - (c+x)I^{-}$$

x = output response, I = neural input, t = time

$$I^{+} = \sum_{k} I(k) \cdot g(k)$$ = convolution of weight mask g with inputs I

$$I^{-} = \sum_{k} I(k) \cdot e(k)$$ = convolution of weight mask e with inputs I

a, b, and c are constants

FIG 3

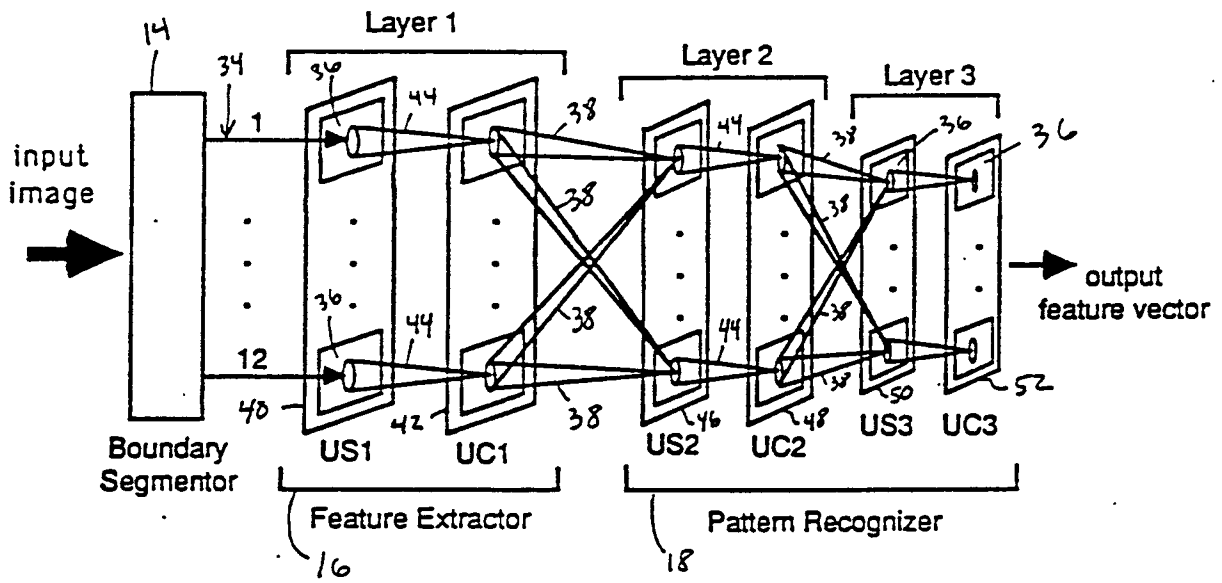

14
34
Layer 1
Layer 2
Layer 3
input
image
1
12
Boundary
Segmentor
US1
UC1
US2
UC2
US3
UC3
output
feature vector
Feature Extractor
Pattern Recognizer
16
18


FIG 4

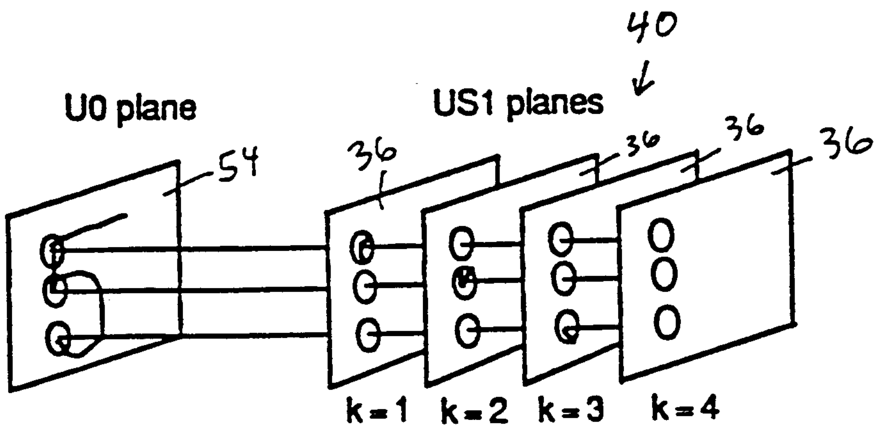


FIG 5

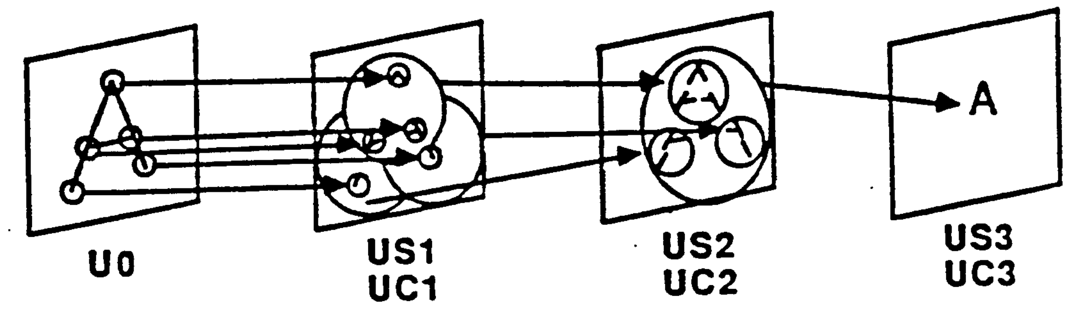


FIG 6

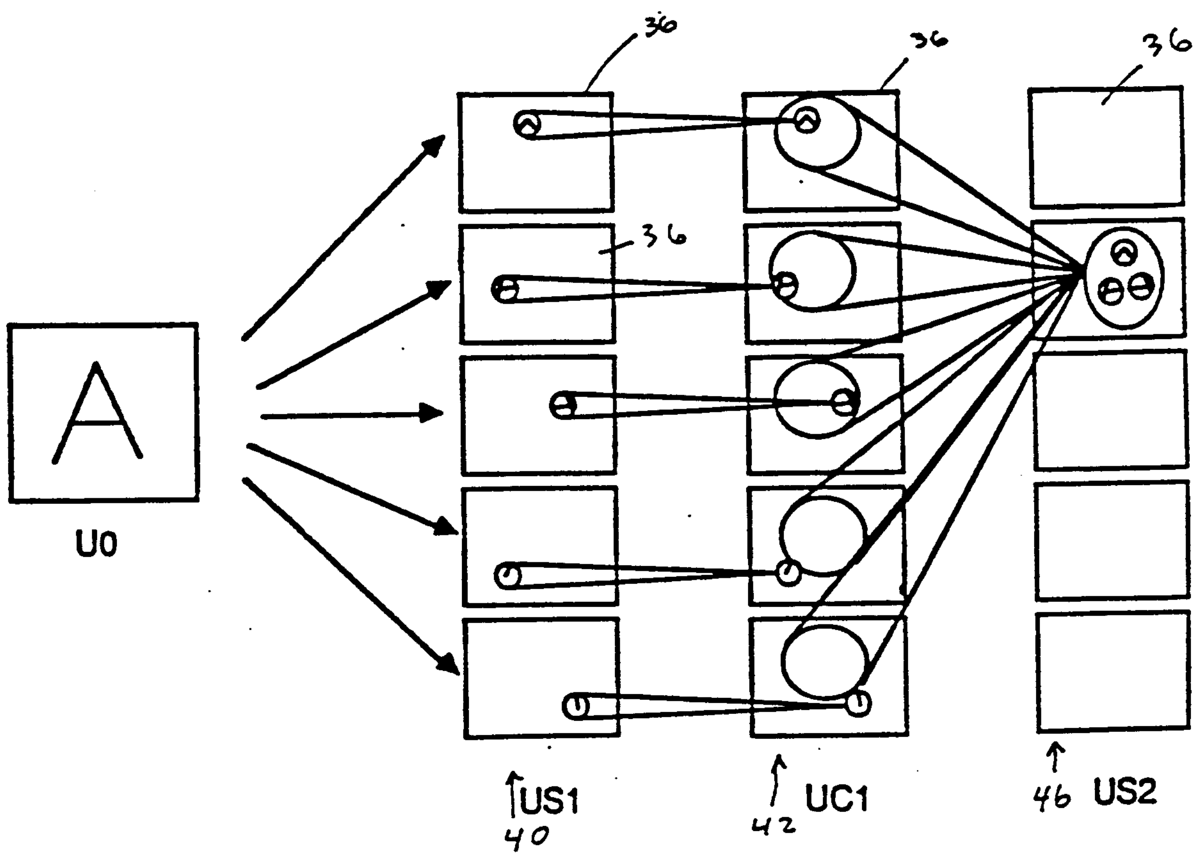


FIG 7

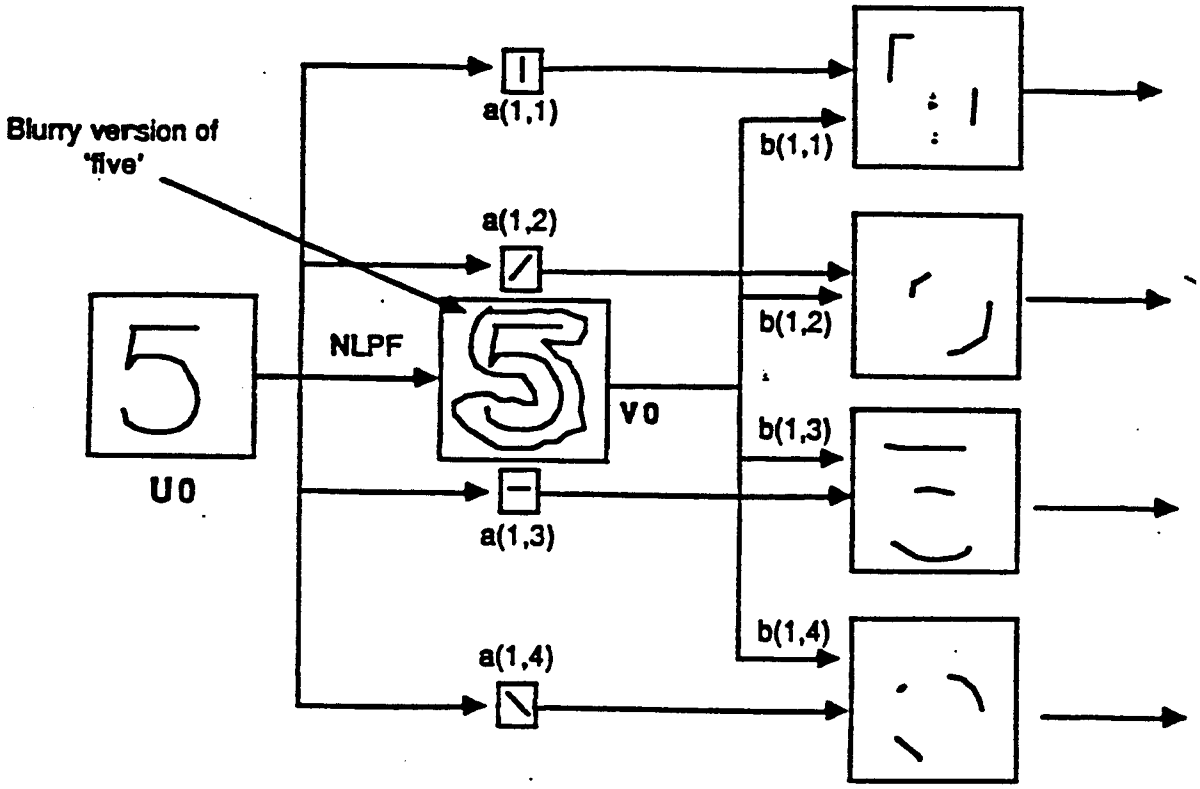

Blurry version of 'five'
a(1,1)
a(1,2)
a(1,3)
a(1,4)
b(1,1)
b(1,2)
b(1,3)
b(1,4)
NLPF
U0
V0
US1


FIG 8

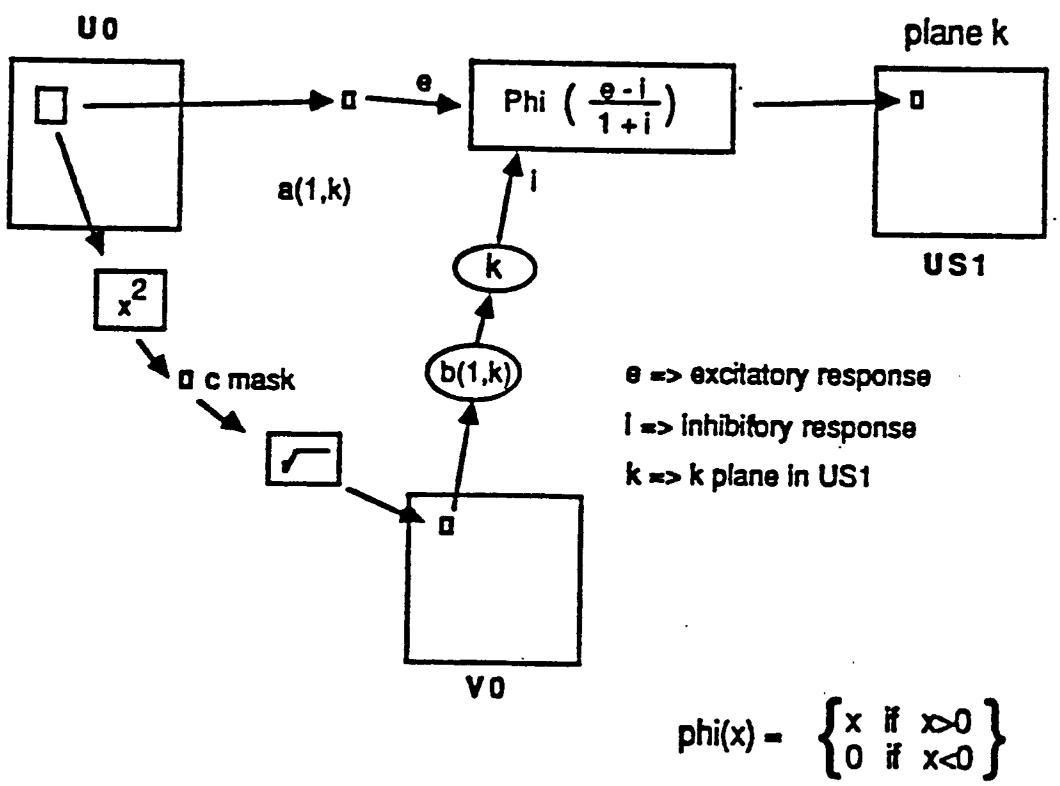

U0
plane k
e
Phi ( e - i / 1 + i )
a(1,k)
i
k
$x^2$
c mask
b(1,k)
US1
V0
e => excitatory response
i => inhibitory response
k => k plane in US1
phi(x) = { x if x>0 ; 0 if x<0 }


FIG 9

| PARAMETERS | GENERAL DESCRIPTION |
|---|---|
| $\sigma_{c0}$ $\sigma_{c1}$ $\sigma_{c2}$ | SIGMA __ C CONTROLS THE SPREAD OF THE 2-D GAUSSIAN FUNCTION USED IN THE CONVOLUTION c MASK, WHICH CONTRIBUTES TO THE INHIBITORY RESPONSE USED IN THE UC TO US TRANSFORMATION. IN ADDITION, THE c MASK IS USED DURING TRAINING TO ADAPT THE a MASKS, WHICH IN TURN INFLUENCE THE EXCITATORY RESPONSE OF THE UC TO US TRANSFORMATION. |
| $\sigma_{d1}$ $\sigma_{d2}$ $\sigma_{d3}$ | SIGMA __ D CONTROLS THE SPREAD OF THE 2-D GAUSSIAN FUNCTION USED IN THE CONVOLUTION d MASK, WHICH CONTRIBUTES TO BOTH THE INHIBITORY AND EXCITATORY RESPONSE USED IN THE US TO UC TRANSFORMATION. |
| $\alpha$ | ALPHA CONTROLS THE SLOPE OF THE SIGMOID FUNCTION, WHICH IS IN TURN USED TO COMPUTE THE RESPONSE OF THE UC PLANES IN THE US TO UC TRANSPORTATION. |
| r1 r2 r3 | THE PARAMETER R IS USED TO WEIGHT THE VALUE OF THE INHIBITORY RESPONSE USED IN THE UC TO US TRANSFORMATION. IT IS HIDDEN INSIDE THE VARIABLE r', WHERE r' = r/(r + 1). |
| INI | INI CONTROLS THE CONNECTIVITY OF THE PLANES IN THE UC TO US TRANSFORMATION. |

FIG 10

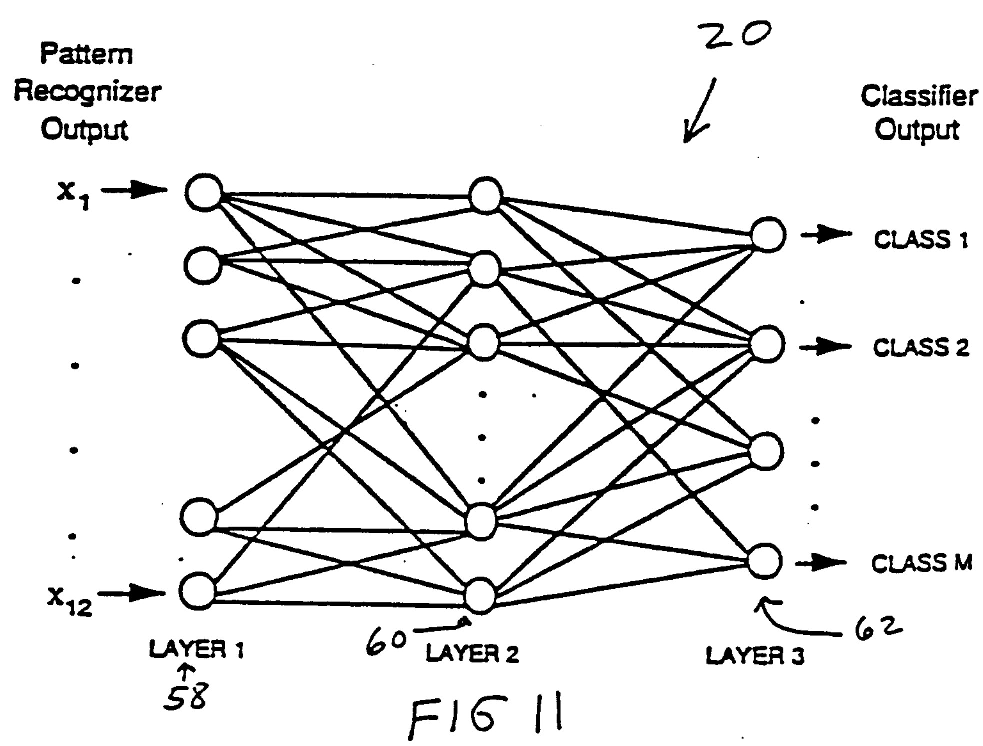


FIG 11